# FASCICULE DE BREVET EUROPEEN

(11) **EP 3 070 678 B1**
(45) Date de publication et mention de la délivrance du brevet: **07.10.2020**
(21) Numéro de dépôt: 16161278.3
(22) Date de dépôt: 18.03.2016
(51) Int. Cl.: G06T 13/80

(54) **PROCÉDÉ DE GÉNÉRATION D'UNE SÉQUENCE VIDÉO CYCLIQUE**
VERFAHREN ZUR ERZEUGUNG EINER ZYKLISCHEN VIDEOSEQUENZ
METHOD FOR GENERATING A CYCLIC VIDEO SEQUENCE

(30) Priorité: 20.03.2015 FR 1552350
(43) Date de publication de la demande: 21.09.2016
(73) Titulaire: Vassort, Thomas Niel, 91530 Le Val Saint Germain (FR)
(72) Inventeur: Vassort, Thomas Niel, 91530 Le Val Saint Germain (FR)
(74) Mandataire: Regimbeau

(56) Documents cités:
- EP-A1- 2 557 773
- SCHODL A ET AL: "VIDEO TEXTURES", COMPUTER GRAPHICS. SIGGRAPH 2000 CONFERENCE PROCEEDINGS. NEW ORLEANS, LA, JULY 23 - 28, 2000; [COMPUTER GRAPHICS PROCEEDINGS. SIGGRAPH], NEW YORK, NY : ACM, US, 23 juillet 2000 (2000-07-23), pages 489-498, XP001003590, DOI: 10.1145/344779.345012 ISBN: 978-1-58113-208-3
- JAMES TOMPKIN ET AL: "Towards Moment Imagery: Automatic Cinemagraphs", VISUAL MEDIA PRODUCTION (CVMP), 2011 CONFERENCE FOR, IEEE, 16 novembre 2011 (2011-11-16), pages 87-93, XP032074521, DOI: 10.1109/CVMP.2011.16 ISBN: 978-1-4673-0117-6
- NEEL JOSHI ET AL: "Cliplets: Juxtaposing Still and Dynamic Imagery", PROCEEDINGS OF THE 25TH ANNUAL ACM SYMPOSIUM ON USER INTERFACE SOFTWARE AND TECHNOLOGY, UIST '12, 7 octobre 2012 (2012-10-07), pages 251-260, XP055110796, New York, New York, USA DOI: 10.1145/2380116.2380149 ISBN: 978-1-45-031580-7

## Description

### DOMAINE TECHNIQUE GENERAL

La présente invention concerne le domaine de l'animation vidéo.

Plus précisément, elle concerne un procédé de génération d'une séquence vidéo cyclique.

### ETAT DE L'ART

Il est aujourd'hui courant d'entendre des séquences sonores « cycliques », c'est-à-dire jouées en boucle : la séquence est conçue pour présenter un début et une fin identique, de sorte qu'il est possible de la répéter en boucle un grand nombre de fois, un auditeur ayant l'impression qu'il s'agit d'une séquence continue.

La réalisation d'une séquence vidéo « cyclique » est bien plus complexe, dans la mesure où un jeu d'acteurs se contrôle bien moins bien qu'un son, et qu'il est impossible de réaliser un début et une fin exactement identiques. Une telle séquence jouée en boucle ne peut pas leurrer l'œil humain, qui voit instantanément le « raccord », c'est-à-dire le moment où l'on redémarre la lecture.

Ainsi, les séquences jouées par exemple sur des supports publicitaires muraux sont en général des clips séparées par des fondus noirs.

Si l'on souhaite quand même tenter de donner l'illusion de boucle, on connait les GIF animés, qui sont constitués d'une succession d'images, mais pas d'une réelle séquence vidéo. Dans la mesure où l'enchainement est à bien moins que 24 images par secondes, il y a souvent un écart conséquent entre deux images successives et l'œil humain est bien plus « tolérant » au raccord. Le GIF animé est souvent utilisé pour ce que l'on appelle des « cinemagraphs », c'est à dire des photographies animées d'un léger mouvement répétitif (généralement sur une petite portion au premier plan de l'image, le fond restant fixe). Les possibilités offertes par le GIF animé restent cependant très limitées, et dans tous les cas ne permettent qu'une qualité médiocre loin des séquences vidéo de qualité « film ».

Il serait par conséquent souhaitable de disposer d'une solution permettant à un utilisateur de réaliser des séquences vidéo en boucle de qualité cinéma, avec un rendu tel que l'œil humain a l'impression d'une séquence continue.

Une solution connue est décrite dans EP2557773A1.

### PRESENTATION DE L'INVENTION

La présente invention se rapporte ainsi selon un premier aspect à un procédé de génération d'une séquence vidéo cyclique, caractérisé en ce qu'il comprend la mise en œuvre par des moyens de traitement de données d'un équipement d'étapes de :
(a) Réception depuis des moyens d'acquisition vidéo d'une séquence vidéo comprenant un motif sensiblement périodique d'une durée donnée inférieure à la durée de la séquence vidéo ;
(b) Détermination d'un premier point singulier de la séquence vidéo dans un premier intervalle de ladite séquence et d'un deuxième point singulier de la séquence vidéo dans un deuxième intervalle de ladite séquence, le deuxième intervalle correspondant au premier intervalle décalé d'une durée approximativement égale à un multiple de ladite durée dudit motif de la séquence vidéo, et lesdits premier et deuxième points singuliers présentant une similarité maximale selon un critère de similarité donné ;
(c) Génération par morphing d'une séquence de raccord entre l'image de la séquence vidéo correspondant au deuxième point singulier et l'image de la séquence vidéo correspondant au premier point singulier ;
(d) Construction de ladite séquence vidéo cyclique par concaténation d'un fragment de ladite séquence vidéo s'étendant du premier point singulier au deuxième point singulier, et de ladite séquence de raccord.

A partir d'une séquence vidéo standard filmée, la présente invention combine la détermination d'un couple de points singulier optimaux pour définir un corps de séquence quasi-cyclique s'étendant du premier au deuxième point singulier, et la génération par morphing d'une séquence de raccord pour revenir au premier point singulier depuis le deuxième point singulier.

Ainsi la séquence finale obtenue est complètement cyclique et peut être diffusée en boucle avec un rendu parfait puisque son début et sa fin coïncident exactement.

Selon d'autres caractéristiques avantageuses et non limitatives :
- ladite séquence vidéo comprend un motif sensiblement périodique d'une durée donnée inférieure à la durée de la séquence vidéo, le deuxième intervalle correspondant au premier intervalle décalé d'une durée approximativement égale à un multiple de ladite durée du motif ;
- ladite séquence vidéo comprend plusieurs motifs sensiblement périodiques, le procédé comprenant la mise en œuvre des étapes (b) à (d) pour chacun des motifs de sorte à générer une pluralité de séquences cycliques ;
- le procédé comprend une étape (e) de construction d'au moins une séquence de transition entre deux des séquences cycliques générés, ladite séquence de transition étant un fragment de ladite séquence vidéo s'étendant du premier point singulier d'une desdites deux séquences cycliques au premier point singulier de l'autre desdites deux séquences cycliques ;
- ledit premier intervalle définit une sous-séquence de ladite séquence vidéo présentant un caractère plus dynamique que le reste de la séquence vidéo ;
- l'évaluation du caractère dynamique d'un point de la séquence comprend également la comparaison de l'image de la séquence correspondant au point avec l'image précédente et/ou l'image suivante de la séquence ;
- ledit caractère dynamique concerne au moins une zone d'attention de l'image ;
- l'étape (b) comprend pour chaque couple d'un point du premier intervalle et d'un point du deuxième intervalle l'évaluation de la similarité entre les deux points, les premier et deuxième points singuliers étant choisis comme le couple de points présentant la similarité la plus élevée ;
- ledit critère de similarité entre deux points de la séquence vidéo comprend une composante statique et une composante dynamique ;
- l'évaluation de la composante statique du critère de similarité entre deux points de la séquence comprend la comparaison des deux images de la séquence correspondant à chacun des deux points ;
- l'évaluation de la composante dynamique du critère de similarité entre deux points de la séquence comprend la comparaison des deux images précédant et/ou des deux images suivant les deux images de la séquence correspondant à chacun des deux points ;
- l'évaluation de la composante dynamique du critère de similarité entre deux points de la séquence comprend également la comparaison respective de chacune des deux images de la séquence correspondant aux deux points avec l'image précédente et/ou l'image suivante de la séquence.

Selon un deuxième aspect, l'invention concerne un système de génération d'une séquence vidéo cyclique, comprenant des moyens d'acquisition vidéo d'une séquence vidéo comprenant un motif sensiblement périodique d'une durée donnée inférieure à la durée de la séquence vidéo, et un équipement comprenant des moyens de traitement de données configurés pour mettre en œuvre :
- Un module de réception de ladite séquence vidéo ;
- Un module de détermination d'un premier point singulier de la séquence vidéo dans un premier intervalle de ladite séquence et d'un deuxième point singulier de la séquence vidéo dans un deuxième intervalle de ladite séquence, le deuxième intervalle correspondant au premier intervalle décalé d'une durée approximativement égale à un multiple de ladite durée dudit motif de la séquence vidéo, et lesdits premier et deuxième points singuliers présentant une similarité maximale selon un critère de similarité donné ;
- Un module de génération par morphing d'une séquence de raccord entre l'image de la séquence vidéo correspondant au deuxième point singulier et l'image de la séquence vidéo correspondant au premier point singulier ;
- Un module de construction de ladite séquence vidéo cyclique par concaténation d'un fragment de ladite séquence vidéo s'étendant du premier point singulier au deuxième point singulier, et de ladite séquence de raccord.

Selon un troisième et un quatrième aspect, l'invention concerne respectivement un produit programme d'ordinateur comprenant des instructions de code pour l'exécution, lorsque ce produit programme est exécuté par des moyens de traitement de données, d'un procédé selon le premier aspect de l'invention de génération d'une séquence vidéo cyclique ; et un moyen de stockage lisible par un équipement informatique sur lequel un produit programme d'ordinateur comprend des instructions de code pour l'exécution d'un procédé selon le premier aspect de l'invention de génération d'une séquence vidéo cyclique.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente un mode de réalisation d'un système pour la mise en en œuvre d'un procédé selon l'invention ;
- la figure 2 illustre la génération d'une séquence cyclique grâce à un mode de réalisation du procédé selon l'invention.

### DESCRIPTION DETAILLEE

### Architecture

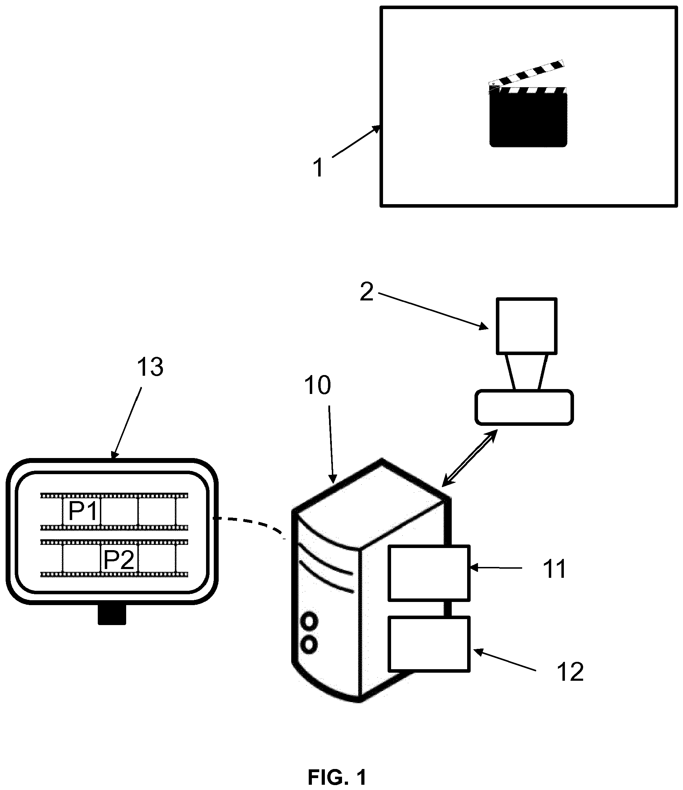

En référence à la **figure 1**, le présent procédé de génération d'une séquence vidéo cyclique, est mis en œuvre au niveau d'un équipement 10 comprenant des moyens de traitement de données 11 (en particulier un processeur) et des moyens de stockage de données 12 (une mémoire, par exemple un disque dur). L'équipement 10 est typiquement un poste de travail, équipé d'une interface utilisateur 13 (un clavier, une souris, un écran, etc.).

L'équipement 10 est connecté directement ou indirectement à des moyens d'acquisition vidéo 2. Ces derniers consistent typiquement en une ou plusieurs caméras conventionnelles, capable d'acquérir une séquence vidéo S représentant une scène 1. Par « directement ou indirectement », on entend :
- dans le premier cas que les moyens 2 et l'équipement 10 sont connectés lors de l'acquisition de donnée via un câble ou un réseau, le fichier vidéo produit lors de l'acquisition pouvant être chargé en temps réel sur l'équipement 10 ;
- dans le deuxième cas que les moyens 2 comprennent leur propre mémoire, laquelle est connectée dans un deuxième temps à l'équipement 10 pour chargement de la séquence vidéo sur les moyens de stockage de données 12 pour traitement.

Dans tous les cas on comprendra que le présent procédé n'est limité à aucun mode de fonctionnement des moyens d'acquisition 2, il suffit seulement qu'ils soient aptes à générer un fichier numérique représentatif d'une séquence vidéo S, de sorte à ce que les moyens de traitement de données 11 de l'équipement 10 puissent les recevoir dans une étape (a). Dans la majorité des cas, la séquence vidéo S sera stockée sur les moyens de stockage 12 en vue de son traitement.

On note que dans la majorité des cas les moyens d'acquisition 2 seront fixes devant une scène 1 présentant quelques éléments mobiles, ce qui facilitera la mise en œuvre du procédé et améliorera son rendu.

### Séquence cyclique

Le présent procédé vise à générer une séquence cyclique SC à partir d'une séquence vidéo S initiale.

On note qu'on est ici dans le cas d'une séquence vidéo S « réelle », c'est-à-dire d'une scène 1 de la réalité qui peut être filmée par une caméra vidéo, et non des images de synthèse par exemple.

La séquence cyclique SC est une séquence apte à être jouée en boucle (contrairement à la séquence S), c'est-à-dire qu'elle présente un début et une fin suffisamment proches pour qu'il soit possible de la répéter sans que l'œil humain ne soit capable (ou alors très difficilement) de déceler le redémarrage.

La séquence initiale S contient (pour une question de qualité du rendu final) un motif sensiblement périodique, et elle est globalement fixe, par exemple filmée sur fond vert, pour améliorer « l'homogénéité » de la séquence.

Pour revenir sur l'aspect périodique, il est par exemple souhaitable que cette séquence S représente un acteur enchainant en continu plusieurs fois le même mouvement. En d'autres termes, l'acteur revient une ou plusieurs fois sensiblement à son point de départ en cours de mouvement. Il n'est à ce niveau pas nécessaire (et d'ailleurs impossible) que l'acteur fasse plusieurs fois exactement le même mouvement (sinon il n'y aurait même pas besoin de mettre en œuvre le présent procédé).

C'est pourquoi l'on dit que la séquence est « sensiblement » périodique : il y a plusieurs occurrences d'un même mouvement, sans que ces occurrences soient exactement identiques, et dans le cas du jeu d'un acteur il suffit juste que ce dernier passe par des positions intermédiaires suffisamment proches pour que des « points singuliers » puissent être identifiés. Ainsi par motif sensiblement périodique, on entend que la séquence S tente de simuler une boucle en comprenant un élément approximativement reproduit une ou plusieurs fois.

### Points singuliers

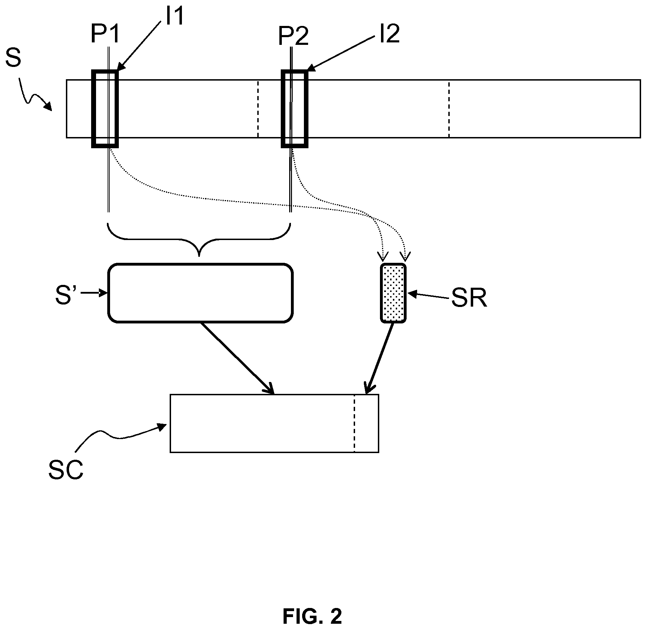

En référence à la **figure 2****,** le procédé comprend dans une étape (b) la détermination d'un premier point singulier P1 de la séquence vidéo S dans un premier intervalle I1 de ladite séquence S et d'un deuxième point singulier P2 de la séquence vidéo S dans un deuxième intervalle I2 de ladite séquence S, lesdits premier et deuxième points singuliers P1, P2 présentant une similarité maximale selon un critère de similarité donné.

L'idée est d'identifier les deux points de la séquence S qui sont les plus « semblables », c'est-à-dire les plus aptes à servir de point de bouclage (c'est-à-dire de début/fin de la boucle).

Ces points singuliers sont chacun recherché sur un intervalle probable, c'est-à-dire que les premier et deuxième intervalles I1, I2 correspondent à des fragments de la séquence S plus susceptibles que d'autres de comprendre des points singuliers. On note que l'un et/ou l'autre des premier et deuxième intervalles I1, I2 peuvent être la séquence S entière, mais cela ralentit fortement la mise en œuvre du procédé. De façon préférée, les deux intervalles I1, I2 sont disjoints, et plus particulièrement le deuxième intervalle I2 est défini en en fonction du premier intervalle I1. En effet, de façon logique les deux points les plus semblables de n'importe quelle séquence vidéo sont deux points immédiatement voisins (séparés d'une image), ce qui n'a pas d'intérêt pour générer la séquence cyclique SC. Il est souhaitable que celle-ci présente une longueur minimum, d'où l'intérêt de définir des intervalles. De façon préférée, si l'on dispose d'une estimation de la durée d'un motif, le deuxième intervalle correspond au premier intervalle décalé de la même durée (ou d'un multiple de la même durée) : les deux intervalles I1, I2 correspondent ainsi à des fragments très semblables de la séquence S, qui sont susceptibles de contenir des points ressemblants. On note par ailleurs que les intervalles ne sont pas forcément continus. En particulier, si un motif est répété plus qu'une fois, le deuxième intervalle I2 peut être défini comme l'union des décalages du premier intervalle I1 d'au moins une fois la durée du motif.

Le premier intervalle I1 n'est pas forcément choisi au début d'un motif : il peut être en plein milieu, le deuxième intervalle I2 étant alors au même niveau dans l'itération suivante du motif, ou dans une itération encore ultérieure (i.e. décalé d'un multiple de la durée approximative du motif, « multiple » incluant une fois). De façon préférée, le premier intervalle I1 est choisi comme correspondant à un moment du motif présentant un caractère « dynamique », c'est-à-dire présent localement un fort mouvement, par contraste avec un moment plutôt statique. De façon préférée, le dynamisme concerne des zones dites « d'attention » de l'image. Il s'agit des points traditionnellement attirés par l'œil humain tels qu'un visage, une main, etc. Ces zones dites d'attention seront choisies préférentiellement comme des parties d'êtres animés (humains, animaux) visibles dans la séquence S.

Ces zones d'attention sont en effet celles au niveau desquelles :
- d'une part des écarts sont le plus susceptibles d'exister, puisque par définition ce sont les mouvements « vivants » qu'il est impossible de reproduire exactement à l'identique, contrairement à ceux d'objets inanimés ; et
- d'autre part un humain pourra le plus facilement remarquer un mauvais raccord.

Plus elles seront en mouvement, plus la boucle passera inaperçue. Les zones d'attention peuvent être identifiées par reconnaissance d'image ou désignées par un utilisateur. On définira dans la suite de la présente description des exemples de façons de quantifier le caractère dynamique d'un point de la séquence.

La longueur des intervalles I1, I2 est choisie en fonction de la longueur de la séquence S, de son dynamisme, de la puissance des moyens de traitement de données 11, etc. Quelques secondes apparaissent suffisantes. On note que les intervalles peuvent être définis par un opérateur sur l'interface 13.

L'exemple de la figure 2 représente un exemple de séquence S comprenant trois motifs. En d'autres termes, l'objet filmé passe quatre fois (à chaque fois approximativement) par son point de départ. Le moment de plus fort dynamisme est environ à un tiers de motif, on définit le premier intervalle à ce niveau. Le deuxième intervalle I2 est défini comme la translation du premier intervalle I1 d'un et/ou de deux motifs. Dans l'exemple représenté, on ne prend que celui décalé une fois.

### Similarité

Par « similarité », on entend le niveau de ressemblance pour l'œil humain. Plus la similarité est grande entre deux images, plus un humain peut croire qu'il s'agit de la même image, et ne pas voir de différence entre ces images.

Comme expliqué, on identifie dans chaque intervalle I1, I2 les deux points présentant la similarité maximale. Il peut s'agir d'un test itératif brut comprenant pour chaque couple d'un point du premier intervalle I1 et d'un point du deuxième intervalle I2, l'évaluation d'une similarité entre les deux points, les premier et deuxième points singuliers étant choisis comme le couple de points présentant la similarité la plus élevée. Alternativement, il suffit de trouver deux points présentant une similarité au-delà d'un seuil acceptable. On note que cette étape peut s'effectuer purement par les moyens de traitement de données 11, ou comprendre la vérification d'un utilisateur qui comparera des couples de points candidats et désignera le meilleur au sens de l'œil humain. La figure 1 représente par exemple sur les moyens d'interface 13 des images sélectionnées de chacun des intervalles I1, I2, l'opérateur effectuant le choix final.

L'évaluation de similarité entre deux points de la séquence S comprend de façon préférée le calcul de deux composantes :
- une composante « statique », i.e. une comparaison, en particulier pixel par pixel, des deux images cibles. Un score peut par exemple représenter le nombre de pixels différents, ou l'écart moyen en RGB des pixels deux à deux, etc. On note que l'importance des points dits d'attention, évoqués avant, peut être prise en compte en leur attribuant un coefficient de pondération plus élevé ;
- une composante « dynamique ». En effet, il n'est pas impossible qu'une séquence comprenne deux images exactement identiques, mais non raccordables. Par exemple, si l'on filme un pendule se balançant de gauche à droite, sur un motif il passera deux fois exactement au centre (une fois depuis la gauche et une fois depuis la droite). Ces deux images ont beau être parfaitement identiques, elles ne sont pas similaires car le mouvement n'est pas le même (une fois le pendule vient de la gauche et l'autre fois de la droite), et un œil humain verrait tout de suite un problème si on les lui présentait enchainées. Pour cette raison, la composante dynamique s'évalue par exemple en regardant les images avant et/ou après l'image cible. Il est souhaitable :
   ∘ Que les images immédiatement avant (respectivement immédiatement après) de chacune des images cible soient les plus identiques entre elles « statiquement » (on pourra utiliser les critères définis ci-avant), ce qui permet de montrer que le mouvement est similaire. En effet, si les deux images cibles sont identiques mais pas les deux images juste avant, c'est qu'elles s'inscrivent chacune dans un mouvement différent et qu'elles ne sont pas acceptables pour un raccord ;
   ∘ Que l'image immédiatement avant (respectivement après) de chacune des images cible et l'image cible elle-même soient les plus différentes, i.e. les moins identiques (on peut utiliser les mécanismes de comparaison évoqués juste avant). En effet, plus les deux images successives sont différentes, plus le caractère dynamique de l'instant est prononcé, et plus un raccord à ce moment sera imperceptible. La comparaison de deux images successives est ainsi une façon d'évaluer à la fois le caractère dynamique d'un point de la séquence (voir précédemment). On peut également appliquer des coefficients de pondération plus élevés sur les zones d'attention.

On peut ainsi calculer la similarité par exemple comme une combinaison linéaire de ces scores statique et dynamique. De façon générale, on comprendra que les points singuliers P1 et P2 correspondent le plus souvent à des images cibles proches, précédées ou suivies d'images proches entre elles, mais assez différentes des images cibles elles-mêmes.

On comprendra que la présente invention n'est limitée à aucune façon particulière d'évaluer la similarité de points de la séquence S, et l'homme du métier saura transposer un grand nombre de techniques connues d'analyse d'image.

### Morphing

A l'issue de l'étape (b), on dispose des premier et deuxième points singuliers P1, P2 de la séquence, lesquels sont deux des plus ressemblants points de la séquence. Le fragment S' de ladite séquence vidéo S s'étendant du premier point singulier P1 au deuxième point singulier P2 (voir figure 2) pourrait presque être bouclé.

Malgré tout, ces points P1, P2 ne sont jamais similaires à 100%, et un bouclage entre P2 et P1 serait visible par l'œil humain qui verrait la transition.

Le présent procédé comprend ainsi dans une étape (c) la génération d'une séquence de raccord SR entre l'image de la séquence vidéo S correspondant au deuxième point singulier P2 et l'image de la séquence vidéo (S) correspondant au premier point singulier P1. Cette séquence de raccord SR est réalisée par morphing (ou « morphose »), technique bien connue. Dans la mesure où les points P2 et P1 sont très similaire, le morphing est léger et passe inaperçus aux yeux des spectateurs. La durée de la séquence de raccord est avantageusement très courte, typiquement moins d'une seconde. On note que la longueur de la séquence de raccord SR peut être fonction du caractère dynamique de la séquence S au niveau des points P1 et P2 : plus le mouvement est dynamique, plus la séquence de raccord SR doit être courte pour ne pas casser le mouvement.

L'homme du métier pourra utiliser n'importe quel algorithme existant pour la mise en œuvre de cette étape de morphing.

### Construction de la séquence cyclique

Dans une dernière étape (d), les moyens de traitement de données 11 construisent la séquence vidéo cyclique SC par concaténation du fragment S' de ladite séquence vidéo S s'étendant du premier point singulier P1 au deuxième point singulier P2, et de ladite séquence de raccord SR.

Ainsi, lors de la séquence S', on passe de P1 à P2, et lors de la séquence de raccord, on repasse de P2 à P1, ce qui permet de fermer la boucle.

Le début et la fin de la séquence cyclique SC obtenue sont ainsi exactement identiques, et la séquence SC peut être diffusée en boucle de façon parfaitement fluide et enchaînée sur des moyens d'affichage (comme un support publicitaire mural), et l'observateur ne verra pas la transition.

### Boucles multiples ou dynamiques

Selon un mode de réalisation particulier (et si la séquence S le permet), il est possible de générer des séquences cycliques SC multiples. L'idée est d'identifier plusieurs motifs au sein de la séquence S initiale et de définir pour chacun une boucle. Par exemple, l'acteur peut, de façon continue, faire trois fois un mouvement A (premier motif) puis deux fois un mouvement B (deuxième motif). Les étapes (b) à (d) peuvent alors mises en œuvre pour chacun des motifs de sorte à générer plusieurs séquences cycliques SC qui pourront chacune être diffusée en boucle, tout en autorisant des transitions d'une séquence cyclique à une autre séquence cyclique. Au moins une de ces transitions peut être construite dans une étape (e) en extrayant le fragment de S liant un point singulier d'une séquence cyclique SC, à un point singulier d'une autre.

Par exemple, si une première séquence cyclique SCa est définie par un fragment [P1-P2] de S (entre les points singuliers P1 et P2) et une deuxième séquence cylique SCb est définie par un fragment [P3-P4] de S entre les points singuliers P3 et P4, avec les points P1, P3, P2 et P4 étant disposés dans cet ordre au sein de la séquence S, le fragment [P1-P3] définit une transition de SCa vers SCb, et le fragment [P3-P2]+SRa (la séquence de raccord associée à la première séquence cyclique SCa, correspondant au morphing de P2 à P1) définit une transition de SCb vers SCa.

A condition de disposer d'une séquence S très longue et comprenant de nombreux motifs (voire plusieurs séquences S dans lesquelles l'acteur effectue les mêmes mouvements), il possible de générer une famille de séquences cycliques SC, l'utilisateur pouvant par exemple déclencher des transitions d'une à une autre en fonction d'interactions diverses lorsqu'elle est diffusée (par exemple en touchant une zone de l'afficheur, en déclenchant un détecteur de mouvement en passant devant l'afficheur, etc.).

Selon un autre mode de réalisation particulier, la boucle peut être dynamique, et changer d'une itération à l'autre (ou au bout d'un certain nombre d'itérations), soit en traitant informatiquement la séquence cyclique SC de sorte à obtenir des séquences cycliques modifiées SC', SC", etc., soit en utilisant la technique des boucles multiples ci-avant. Par exemple, on peut envisager une boucle dont la durée suit un élément dynamique, par exemple les saisons. La longueur de la boucle changera de jour en jour avec la longueur du jour, et changera complétement à chaque saison (une boucle hiver, une boucle automne, une boucle été, et une boucle printemps).

### Système & produit programme d'ordinateur

Selon un deuxième aspect, l'invention concerne un système de génération d'une séquence vidéo cyclique SC pour la mise en œuvre du procédé selon le premier aspect.

Le système comprend comme expliqué des moyens d'acquisition vidéo 2 d'une séquence vidéo S et un équipement 10 comprenant des moyens de traitement de données 11 (et typiquement des moyens de stockage de données 12 et une interface 13).

Les moyens de traitement de données 11 sont configurés pour mettre en œuvre :
- Un module de réception de ladite séquence vidéo S ;
- Un module de détermination d'un premier point singulier P1 de la séquence vidéo S dans un premier intervalle I1 de ladite séquence S et d'un deuxième point singulier P2 de la séquence vidéo S dans un deuxième intervalle I2 de ladite séquence S, lesdits premier et deuxième points singuliers P1, P2 présentant une similarité maximale selon un critère de similarité donné ;
- Un module de génération par morphing d'une séquence de raccord SR entre l'image de la séquence vidéo S correspondant au deuxième point singulier P2 et l'image de la séquence vidéo S correspondant au premier point singulier P1 ;
- Un module de construction de ladite séquence vidéo cyclique SC par concaténation d'un fragment S' de ladite séquence vidéo S s'étendant du premier point singulier P1 au deuxième point singulier P2, et de ladite séquence de raccord SR.

Selon un troisième et un quatrième aspects, l'invention concerne un produit programme d'ordinateur comprenant des instructions de code pour l'exécution, lorsque ce produit programme est exécuté par des moyens de traitement de données 11 (typiquement ceux de l'équipement 10), d'un procédé selon le premier aspect de l'invention de génération d'une séquence vidéo cyclique, ainsi que des moyen de stockage lisible par un équipement informatique (typiquement les moyen de stockage de données 12 de l'équipement 10) sur lequel un produit programme d'ordinateur sur lequel on trouve ces instructions de code.

## Revendications

1. Procédé de génération d'une séquence vidéo cyclique (SC), **caractérisé en ce qu'**il comprend la mise en œuvre par des moyens de traitement de données (11) d'un équipement (10) d'étapes de :
(a) Réception depuis des moyens d'acquisition vidéo (2) d'une séquence vidéo (S) comprenant un motif sensiblement périodique d'une durée donnée inférieure à la durée de la séquence vidéo (S) ;
(b) Détermination d'un premier point singulier (P1) de la séquence vidéo (S) dans un premier intervalle (I1) de ladite séquence (S) et d'un deuxième point singulier (P2) de la séquence vidéo (S) dans un deuxième intervalle (I2) de ladite séquence (S), le deuxième intervalle (I2) correspondant au premier intervalle (I1) décalé d'une durée approximativement égale à un multiple de ladite durée dudit motif de la séquence vidéo (S), et lesdits premier et deuxième points singuliers (P1, P2) présentant une similarité maximale selon un critère de similarité donné ;
(c) Génération par morphing d'une séquence de raccord (SR) entre l'image de la séquence vidéo (S) correspondant au deuxième point singulier (P2) et l'image de la séquence vidéo (S) correspondant au premier point singulier (P1) ;
(d) Construction de ladite séquence vidéo cyclique (SC) par concaténation d'un fragment (S') de ladite séquence vidéo (S) s'étendant du premier point singulier (P1) au deuxième point singulier (P2), et de ladite séquence de raccord (SR).

2. Procédé selon la revendication 1, dans lequel ladite séquence vidéo (S) comprend plusieurs motifs sensiblement périodiques, le procédé comprenant la mise en œuvre des étapes (b) à (d) pour chacun des motifs de sorte à générer une pluralité de séquences cycliques (SC).

3. Procédé selon la revendication 2, comprenant une étape (e) de construction d'au moins une séquence de transition entre deux des séquences cycliques (SC) générés, ladite séquence de transition étant un fragment de ladite séquence vidéo (S) s'étendant du premier point singulier (P1) d'une desdites deux séquences cycliques (SC) au premier point singulier (P1) de l'autre desdites deux séquences cycliques (SC).

4. Procédé selon l'une des revendications 1 à 3, dans lequel ledit premier intervalle (I1) définit une sous-séquence de ladite séquence vidéo (S) présentant un caractère plus dynamique que le reste de la séquence vidéo (S).

5. Procédé selon la revendication 4, dans lequel l'évaluation du caractère dynamique d'un point de la séquence (S) comprend également la comparaison de l'image de la séquence (S) correspondant au point avec l'image précédente et/ou l'image suivante de la séquence (S).

6. Procédé selon l'une des revendications 4 et 5, dans lequel ledit caractère dynamique concerne au moins une zone d'attention de l'image.

7. Procédé selon l'une des revendications 1 à 6, dans lequel l'étape (b) comprend pour chaque couple d'un point du premier intervalle (I1) et d'un point du deuxième intervalle (I2) l'évaluation de la similarité entre les deux points, les premier et deuxième points singuliers étant choisi comme le couple de points présentant la similarité la plus élevée.

8. Procédé selon l'une des revendications 1 à 7, dans lequel ledit critère de similarité entre deux points de la séquence vidéo comprend une composante statique et une composante dynamique.

9. Procédé selon la revendication 8, dans lequel l'évaluation de la composante statique du critère de similarité entre deux points de la séquence (S) comprend la comparaison des deux images de la séquence (S) correspondant à chacun des deux points.

10. Procédé selon l'une des revendications 8 et 9, dans lequel l'évaluation de la composante dynamique du critère de similarité entre deux points de la séquence (S) comprend la comparaison des deux images précédant et/ou des deux images suivant les deux images de la séquence (S) correspondant à chacun des deux points.

11. Procédé selon la revendication 10, dans lequel l'évaluation de la composante dynamique du critère de similarité entre deux points de la séquence (S) comprend également la comparaison respective de chacune des deux images de la séquence (S) correspondant aux deux points avec l'image précédente et/ou l'image suivante de la séquence (S).

12. Système de génération d'une séquence vidéo cyclique (SC), comprenant des moyens d'acquisition vidéo (2) d'une séquence vidéo (S) comprenant un motif sensiblement périodique d'une durée donnée inférieure à la durée de la séquence vidéo (S), et un équipement (10) comprenant des moyens de traitement de données (11) configurés pour mettre en œuvre :
- Un module de réception de ladite séquence vidéo (S) ;
- Un module de détermination d'un premier point singulier (P1) de la séquence vidéo (S) dans un premier intervalle (I1) de ladite séquence (S) et d'un deuxième point singulier (P2) de la séquence vidéo (S) dans un deuxième intervalle (I2) de ladite séquence (S), le deuxième intervalle (I2) correspondant au premier intervalle (I1) décalé d'une durée approximativement égale à un multiple de ladite durée dudit motif de la séquence vidéo (S), et lesdits premier et deuxième points singuliers (P1, P2) présentant une similarité maximale selon un critère de similarité donné ;
- Un module de génération par morphing d'une séquence de raccord (SR) entre l'image de la séquence vidéo (S) correspondant au deuxième point singulier (P2) et l'image de la séquence vidéo (S) correspondant au premier point singulier (P1) ;
- Un module de construction de ladite séquence vidéo cyclique (SC) par concaténation d'un fragment (S') de ladite séquence vidéo (S) s'étendant du premier point singulier (P1) au deuxième point singulier (P2), et de ladite séquence de raccord (SR).

13. Produit programme d'ordinateur comprenant des instructions de code pour l'exécution, lorsque ce produit programme est exécuté par des moyens de traitement de données (11), d'un procédé selon l'une des revendications 1 à 11 de génération d'une séquence vidéo cyclique (SC).

14. Moyen de stockage lisible par un équipement informatique sur lequel un produit programme d'ordinateur comprend des instructions de code pour l'exécution, lorsque ce produit programme est exécuté par des moyens de traitement de données (11), d'un procédé selon l'une des revendications 1 à 11 de génération d'une séquence vidéo cyclique (SC).

## Patentansprüche

1. Verfahren zum Erzeugen einer zyklischen Videosequenz (SC), **dadurch gekennzeichnet, dass** es das Umsetzen, durch Datenverarbeitungsmittel (11) einer Ausrüstung (10), folgender Schritte umfasst:
(a) Empfangen aus Videoerfassungsmitteln (2) einer Videosequenz (S), die ein im Wesentlichen periodisches Motiv einer gegebenen Dauer umfasst, die geringer ist, als die Dauer der Videosequenz (S);
(b) Bestimmen eines ersten Einzelpunktes (P1) der Videosequenz (S) in einem ersten Intervall (I1) der Sequenz (S) und eines zweiten Einzelpunktes (P2) der Videosequenz (2) in einem zweiten Intervall (I2) der Sequenz (S), wobei das zweite Intervall (I2) dem ersten Intervall (I1) entspricht, das um eine Dauer versetzt ist, die annähernd gleich einem Vielfachen der Dauer des Motivs der Videosequenz (S) ist, und der erste und zweite Einzelpunkt (P1, P2) eine maximale Ähnlichkeit entsprechend einem gegebenen Ähnlichkeitskriterium aufweisen;
(c) Erzeugen, durch Morphing, einer Anschlusssequenz (SR) zwischen dem Bild der Videosequenz (S) entsprechend dem zweiten Einzelpunkt (P2) und dem Bild der Videosequenz (S) entsprechend dem ersten Einzelpunkt (P1);
(d) Konstruieren der zyklischen Videosequenz (SC) durch Verkettung eines Fragments (S') der Videosequenz (S), die sich von dem ersten Einzelpunkt (P1) zum zweiten Einzelpunkt (P2) erstreckt, und der Anschlusssequenz (SR).

2. Verfahren nach Anspruch 1, wobei die Videosequenz (S) mehrere im Wesentlichen periodische Motive umfasst, wobei das Verfahren das Umsetzen der Schritte (b) bis (d) für jedes der Motive umfasst, um eine Vielzahl von zyklischen Sequenzen (SC) zu erzeugen.

3. Verfahren nach Anspruch 2, umfassend einen Schritt (e) zum Konstruieren mindestens einer Übergangssequenz zwischen zwei erzeugten zyklischen Sequenzen (SC), wobei die Übergangssequenz ein Fragment der Videosequenz (S) ist, das sich vom ersten Einzelpunkt (P1) einer der beiden zyklischen Sequenzen (SC) zum ersten Einzelpunkt (P1) der anderen der zyklischen Sequenzen (SC) erstreckt.

4. Verfahren nach einem der Ansprüche 1 bis 3, wobei das erste Intervall (I1) eine Teilsequenz der Videosequenz (S) definiert, die einen dynamischeren Charakter als der Rest der Videosequenz (S) aufweist.

5. Verfahren nach Anspruch 4, wobei die Bewertung des dynamischen Charakters eines Punktes der Sequenz (S) auch den Vergleich des Bildes der dem Punkt entsprechenden Sequenz (S) mit dem vorstehenden und/oder nachfolgenden Bild der Sequenz (S) umfasst.

6. Verfahren nach einem der Ansprüche 4 und 5, wobei der dynamische Charakter mindestens eine Aufmerksamkeitszone des Bildes betrifft.

7. Verfahren nach einem der Ansprüche 1 bis 6, wobei der Schritt (b) für jedes Paar eines Punktes des ersten Intervalls (I1) und eines Punktes des zweiten Intervalls (I2) die Bewertung der Ähnlichkeit zwischen den beiden Punkten umfasst, wobei der erste und zweite Einzelpunkt als Punktepaar ausgewählt werden, die die größte Ähnlichkeit aufweisen.

8. Verfahren nach einem der Ansprüche 1 bis 7, wobei das Ähnlichkeitskriterium zwischen zwei Punkten der Videosequenz eine statische Komponente und eine dynamische Komponente umfasst.

9. Verfahren nach Anspruch 8, wobei die Bewertung der statischen Komponente des Ähnlichkeitskriteriums zwischen zwei Punkten der Sequenz (S) den Vergleich der beiden Bilder der jedem der beiden Punkte entsprechenden Sequenz (S) umfasst.

10. Verfahren nach einem der Ansprüche 8 und 9, wobei die Bewertung der dynamischen Komponente des Ähnlichkeitskriteriums zwischen zwei Punkten der Sequenz (S) den Vergleich der beiden vorstehenden Bilder und/oder nachfolgenden Bilder der beiden Bilder der jedem der beiden Punkte entsprechenden Sequenz (S) umfasst.

11. Verfahren nach Anspruch 10, wobei die Bewertung der dynamischen Komponente des Ähnlichkeitskriteriums zwischen zwei Punkten der Sequenz (S) auch den jeweiligen Vergleich jedes der beiden Bilder der den beiden Punkten entsprechenden Sequenz (S) mit dem vorstehenden und/oder nachfolgenden Bild der Sequenz (S) umfasst.

12. System zum Erzeugen einer zyklischen Videosequenz (SC), umfassend Videoerfassungsmittel (2) einer Videosequenz (S), ein im Wesentlichen periodisches Motiv einer gegebenen Dauer umfassend, die geringer ist, als die Dauer der Videosequenz (S), und eine Ausrüstung (10), die Datenverarbeitungsmittel (11) umfasst, die konfiguriert sind, um Folgendes umzusetzen:
- ein Modul zum Empfangen der Videosequenz (S);
- ein Modul zum Bestimmen eines ersten Einzelpunktes (P1) der Videosequenz (S) in einem ersten Intervall (I1) der Sequenz (S) und eines zweiten Einzelpunktes (P2) der Videosequenz (S) in einem zweiten Intervall (I2) der Sequenz (S), wobei das zweite Intervall (I2) dem ersten Intervall (I1) entspricht, das um eine Dauer versetzt ist, die annähernd gleich einem Vielfachen der Dauer des Motivs der Videosequenz (S) ist, und der erste und zweite Einzelpunkt (P1, P2) eine maximale Ähnlichkeit entsprechend einem gegebenen Ähnlichkeitskriterium aufweisen;
- ein Modul zum Erzeugen, durch Morphing, einer Anschlusssequenz (SR) zwischen dem Bild der Videosequenz (S) entsprechend dem zweiten Einzelpunkt (P2) und dem Bild der Videosequenz (S) entsprechend dem ersten Einzelpunkt (P1);
- ein Modul zum Konstruieren der zyklischen Videosequenz (SC) durch Verkettung eines Fragments (S') der Videosequenz (S), die sich von dem ersten Einzelpunkt (P1) zum zweiten Einzelpunkt (P2) erstreckt, und der Anschlusssequenz (SR).

13. Computerprogrammprodukt, Codeanweisungen zur Ausführung, wenn dieses Programmprodukt durch Datenverarbeitungsmittel (11) ausgeführt wird, eines Verfahrens nach einem der Ansprüche 1 bis 11 zum Erzeugen einer zyklischen Videosequenz (SC) umfassend.

14. Durch eine Computerausrüstung lesbare Speichermittel, in denen ein Computerprogrammprodukt Codeanweisungen zur Ausführung, wenn dieses Programmprodukt durch Datenverarbeitungsmittel (11) ausgeführt wird, eines Verfahrens nach einem der Ansprüche 1 bis 11 zum Erzeugen einer zyklischen Videosequenz (SC) umfasst.

## Claims

1. A method for generating a cyclic video sequence (SC), **characterized in that** it comprises implementing by data-processing means (11) of an equipment (10), steps of:
(a) Reception from video-acquisition means (2) of a video sequence (S) comprising a substantially periodic pattern of a given duration which is shorter than the duration of the video sequence (S);
(b) Determination of a first singular point (P1) of the video sequence (S) in a first interval (11) of said sequence (S) and a second singular point (P2) of the video sequence (S) in a second interval (12) of said sequence (S), the second interval (12) corresponding to the first interval (11) offset by a duration approximately equal to a multiple of said duration of said pattern of the video sequence (S), and said first and second singular points (P1, P2) having a maximum similarity according to a given similarity criterion;
(c) Generation of a connecting sequence (SR) between the image of the video sequence (S) corresponding to the second singular point (P2) and the image of the video sequence (S) corresponding to the first singular point (P1) by morphing;
(d) Construction of said cyclic video sequence (SC) by concatenation of a fragment (S') of said video sequence (S) extending from the first singular point (P1) to the second singular point (P2), and of said connecting sequence (SR).

2. The method according to claim 1, wherein said video sequence (S) comprises several substantially periodic patterns, the method comprising performing steps (b) to (d) for each of the patterns so as to generate a plurality of cyclic sequences (SC).

3. The method according to claim 2, comprising a construction step (e) of at least one transition sequence between two of the generated cyclic sequences (SC), said transition sequence being a fragment of said video sequence (S) extending from the first singular point (P1) of one of said two cyclic sequences (SC) to the first singular point (P1) of the other of said two cyclic sequences (SC).

4. The method according to one of claims 1 to 3, wherein said first interval (11) defines a sub-sequence of said video sequence (S) having a character more dynamic than the rest of the video sequence (S).

5. The method according to claim 4, wherein evaluation of the dynamic character of a point of the sequence (S) also comprises comparison of the image of the sequence (S) corresponding to the point with the preceding image and/or the following image of the sequence (S).

6. The method according to one of claims 4 and 5, wherein said dynamic character relates to at least one attention area of the image.

7. The method according to one of claims 1 to 6, wherein step (b) comprises for each couple of a point of the first interval (11) and a point of the second interval (12) the evaluation of the similarity between the two points, the first and second singular points being selected as the couple of points having the greatest similarity.

8. The method according to one of claims 1 to 7, wherein said similarity criterion between two points of the video sequence comprises a static component and a dynamic component.

9. The method according to claim 8, wherein the evaluation of the static component of the similarity criterion between two points of the sequence (S) comprises the comparison of the two images of the sequence (S) corresponding to each of the two points.

10. The method according to one of claims 8 and 9, wherein the evaluation of the dynamic component of the similarity criterion between two points of the sequence (S) comprises comparison of the two preceding images and/or of the two images following the two images of the sequence (S) corresponding to each of the two points.

11. The method according to claim 11, wherein the evaluation of the dynamic component of the similarity criterion between two points of the sequence (S) also comprises the respective comparison of each of the two images of the sequence (S) corresponding to the two points with the preceding image and/or the following image of the sequence (S).

12. A system for generating a cyclic video sequence (SC), comprising video-acquisition means (2) of a video sequence (S) comprising a substantially periodic pattern of a given duration which is shorter than the duration of the video sequence (S), and equipment (10) comprising data-processing means (11) configured to implement:
- A reception module of said video sequence (S);
- A module for determination of a first singular point (P1) of the video sequence (S) in a first interval (11) of said sequence (S) and a second singular point (P2) of the video sequence (S) in a second interval (12) of said sequence (S), the second interval (12) corresponding to the first interval (11) offset by a duration approximately equal to a multiple of said duration of said pattern of the video sequence (S), and said first and second singular points (P1, P2) having a maximum similarity according to a given similarity criterion;
- A morphing module for generating a connecting sequence (SR) between the image of the video sequence (S) corresponding to the second singular point (P2) and the image of the video sequence (S) corresponding to the first singular point (P1);
- A construction module of said cyclic video sequence (SC) by concatenation of a fragment (S') of said video sequence (S) extending from the first singular point (P1) to the second singular point (P2), and of said connecting sequence (SR).

13. Computer program product comprising code instructions for execution, when this program product is executed by data-processing means (11), of a method according to one of claims 1 to 11 for generating a cyclic video sequence (SC).

14. Storage means readable by computer hardware on which a computer program product comprises code instructions for execution, when this product is executed by data processing means (11), of a method according to one of claims 1 to 11 for generating a cyclic video sequence (SC).
